# FASCICULE DE BREVET EUROPEEN

(11) **EP 3 568 612 B1**
(45) Date de publication et mention de la délivrance du brevet: **19.07.2023**
(21) Numéro de dépôt: 18700799.2
(22) Date de dépôt: 08.01.2018
(51) Int. Cl.: F16H 19/06, F16G 13/20, B66F 3/06

(54) **DISPOSITIF DE CHAINE DE POUSSEE**
SCHUBKETTENVORRICHTUNG
THRUST CHAIN DEVICE

(30) Priorité: 10.01.2017 FR 1750216
(43) Date de publication de la demande: 20.11.2019
(73) Titulaire: Serapid - France, 76370 Rouxmesnil Bouteilles (FR)
(72) Inventeur: SEIGNEUR, Ivan, 76200 Dieppe (FR); DEBEAUVAIS, Alexandre, 76370 Petit caux (FR)
(74) Mandataire: Cabinet Netter
(86) Numéro de dépôt international: PCT/FR2018/050036
(87) Numéro de publication internationale: WO 2018/130769

(56) Documents cités:
- EP-A1- 2 700 844
- WO-A1-2005/108821
- DE-A1-102014 007 458
- US-A1- 2009 008 615

## Description

L'invention concerne les machineries de déplacement de charges par poussée, et plus particulièrement les ensembles de transmission utilisés dans de telles machineries.

Dans les domaines où le déplacement de charges importantes sur de grandes courses est nécessaire alors que l'espace disponible est limité, il est connu d'utiliser des machineries à chaîne appelées chaînes rigides. FR 2 786 476, au nom de la Demanderesse, décrit une colonne articulée élévatrice de charges mettant en oeuvre une chaîne rigide. Le document US 2009008615 A1 décrit une machinerie comprenant une chaîne ouverte de poussée comprenant une portion de poussée et une portion magasin. Ce système sert à pousser et à tirer une charge dans le contexte d'une installation de forage pour le levage et l'abaissement de tubulaires.

Les machineries à chaîne rigide, ou barre articulée, permettent de mettre en mouvement une chaîne pour la faire passer d'un état replié dans lequel elle occupe un encombrement faible à un état déployé sous la forme d'une structure rectiligne et rigide capable de supporter de fortes charges de compression.

Par comparaison avec des systèmes à vérin, à bras ou à pantographe, une chaîne rigide présente un encombrement réduit à l'état replié pour une course de déploiement longue. Les machineries à chaînes rigides sont, par exemple, utilisées dans l'industrie du spectacle pour déplacer des éléments de décors ou de scènes sur des courses importantes, à des vitesses élevées. Ce type de machinerie peut également être utilisé dans des industries de production, par exemple pour la fabrication à la chaîne de produits présentant des masses élevées.

La course de fonctionnement des chaînes rigides peut être adaptée à l'environnement d'utilisation en modifiant le nombre de maillons de la chaîne.

Les machineries existantes commercialisées par la Demanderesse donnent satisfaction. Néanmoins, pour rendre cette technologie apte à pénétrer de nouveaux marchés en remplacement d'autres technologies plus polluantes ou encombrantes, la Demanderesse a identifié un besoin de chaînes de poussée de grande longueur à vitesse élevée, bruit réduit et maintenance peu fréquente.

L'invention vient améliorer la situation.

La Demanderesse propose un dispositif de chaîne de poussée tel que décrit dans la revendication 1.

Un tel dispositif s'avère intéressant pour l'élévation de charges variables. La maintenance peut être réduite au minimum.

Un tel ensemble de transmission permet de soumettre la chaîne à des forces dont la résultante est mieux alignée avec la direction de translation de la chaîne. Les composantes des forces transmises de la roue dentée à la chaîne autres que celle de la direction de translation de la chaîne sont rendues négligeables. L'efficacité énergétique de la transmission est significativement supérieure à celle des transmissions connues jusqu'alors. Le rendement est amélioré. Outre l'économie d'énergie dégagée, les contraintes mécaniques supportées par l'ensemble de transmission et par l'installation s'en trouvent réduites. En particulier, les organes guidant la chaîne sont moins sollicités. Il en résulte que, toutes autres caractéristiques égales par ailleurs, l'ensemble de transmission définis ci-avant permet d'obtenir des installations dont les vibrations, l'usure et le bruit en fonctionnement sont considérablement réduits par rapport aux installations connues.

Dans un mode de réalisation, lesdites surfaces de contact sont des surfaces de roulement.

Dans un mode de réalisation, lesdites surfaces de contact sont des surfaces de glissement.

Dans un mode de réalisation, le pignon d'entraînement est unique. Le pignon d'entraînement peut comprendre une ou plusieurs rangées de dents.

Dans un mode de réalisation, au moins l'une de la portion de poussée et de la portion magasin est disposée au-dessus du pignon, et la portion de liaison est disposée au-dessous du pignon. L'encombrement dans la zone du pignon est faible. Dans le cas d'un montage vertical, la portion de poussée et la portion magasin sont disposées au-dessus du pignon. Dans le cas d'un montage oblique, la portion de poussée est disposée au-dessus du pignon et un organe de rattrapage de jeu peut être ajouté.

Dans un mode de réalisation, la portion de liaison est libre. La portion de liaison pend sous le pignon, sa forme étant alors dictée par la longueur des maillons et le nombre de maillons.

Dans un mode de réalisation, la portion de liaison est guidée par un organe de renvoi. L'organe de renvoi présente un profil distinct d'un arc de cercle. Lors d'essais, il s'est avéré qu'un profil spécifique permettait de meilleures performances, notamment en termes de bruit.

Dans un mode de réalisation, l'organe de renvoi est en développante de cercle approchée. La développante de cercle autorise la prise en compte fine de la géométrie des pièces.

Dans un mode de réalisation, l'organe de renvoi est fixe. Le montage du dispositif est simple.

Dans un mode de réalisation, l'organe de renvoi est réglable en position. A la mise en service, un réglage en position définitif peut être effectué.

Dans un mode de réalisation, l'organe de renvoi comprend un tendeur.

Dans un mode de réalisation, l'organe de renvoi comprend un organe de mise en compression.

Dans un mode de réalisation, le pignon comprend une denture droite incluant entre 5 et 15 dents. Un tel nombre de dents permet d'assurer une bonne continuité du mouvement entre la roue et la chaîne et d'éviter les mouvements incontrôlés lors du passage d'une dent à une autre et de limiter les vibrations et les bruits afférents.

Dans un mode de réalisation, le pignon comprend une denture droite présentant un module compris entre 3 et 64 millimètres.

Dans un mode de réalisation, la chaîne inclut des maillons articulés les uns avec les autres par des barreaux. Le barreau est monté fou sur des maillons de la chaîne. Le roulement entre la roue et les barreaux est favorisé par rapport aux frottements. L'usure au cours de l'utilisation de l'ensemble de transmission est réduite.

Dans un mode de réalisation, l'un au moins des barreaux comprend un corps sensiblement cylindrique et au moins une bague enfilée de manière libre en rotation autour du corps de manière à former un galet de guidage et/ou d'entraînement pour la chaîne. Les galets font alors office de pièce d'usure et peuvent être remplacés rapidement et facilement au cours d'opérations de maintenance sans démonter complètement la chaîne, ce qui réduit les coûts d'entretien.

Dans un mode de réalisation, l'axe de rotation du pignon est horizontal au cours du fonctionnement.

Dans un mode de réalisation, la portion de poussée est rectiligne.

Dans un mode de réalisation, la chaîne comprend un organe élastique précontraint en tension.

Dans un mode de réalisation, la ligne d'action présente un angle avec la portion de poussée compris entre -2° et 2°.

Selon l'invention le guide présente une première portion droite correspondant à la portion de poussée, une deuxième portion droite correspondant à la portion magasin et une portion courbe correspondant à la portion de liaison, et offre une surface de roulement dirigée vers l'extérieur, la portion courbe étant convexe, la portion courbe se raccordant à la première portion droite à une extrémité et à la deuxième portion droite à l'autre extrémité de manière lisse, la portion courbe formant un organe de renvoi, la portion courbe étant à rayon non constant et s'étendant sur 180°.

Selon l'invention la portion courbe présente une symétrie par rapport au plan passant par l'axe du pignon d'entraînement et par l'axe de la portion de poussée et est constituée de deux quadrants identiques, chaque quadrant présente une symétrie par rapport à un plan à 45° par rapport au plan passant par l'axe du pignon d'entraînement et par l'axe de la portion de poussée et parallèle à l'axe de la portion de poussée, chaque quadrant comprenant une zone rectiligne supérieure disposée dans le prolongement de la première portion droite ou de la deuxième portion droite, une zone rectiligne inférieure disposée dans le prolongement de la zone rectiligne inférieure de l'autre quadrant et dans le plan passant par l'axe du pignon d'entraînement et normal à l'axe de la portion de poussée, et une zone arrondie entre la zone rectiligne supérieure et la zone rectiligne inférieure.

Dans un mode de réalisation, la portion courbe comprend deux portions en arc de cercle de même rayon et de centres décalés, distants horizontalement l'un de l'autre, le rayon étant inférieur à la demi distance entre les deux zones rectilignes supérieures.

Dans un mode de réalisation, le guide forme une surface de roulement pour des galets de guidage.

Dans un mode de réalisation, la portion courbe comprend une pluralité de portions en arc de cercle, lesdites portions étant tangentes.

D'autres caractéristiques, détails et avantages de l'invention apparaîtront à la lecture de la description détaillée ci-après, et des dessins annexés, sur lesquels :
- la figure 1 est une vue de côté d'un dispositif de chaîne rigide selon un aspect de l'invention,
- les figures 2 à 5 sont des vues de détail de la figure 1 à des positions angulaires de pignon décalées successivement de 5°,
- la figure 6 est une vue de côté d'un dispositif de chaîne rigide selon un autre aspect de l'invention,
- les figures 7 à 10 sont des vues de détail de la figure 6 à des positions angulaires de pignon décalées successivement de 5°,
- la figure 11 est une vue de côté d'un dispositif de chaîne rigide selon un autre aspect de l'invention,
- les figures 12 et 13 sont des vues de dessus et en perspective d'une chaîne rigide selon un aspect de l'invention ;
- la figure 14 est une vue en perspective d'une chaîne rigide selon un aspect de l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Le profil d'un pignon engrenant avec une chaîne diffère largement du profil de deux engrenages engrenant ensemble. La chaîne présente des barreaux cylindriques de révolution entrant en contact avec les dents du pignon. Les barreaux sont montés libres pour pouvoir tourner au contact du pignon. Le diamètre de barreau et la distance entre les axes de deux barreaux consécutifs sont des paramètres de la chaîne impactant le pignon. Le pignon se caractérise notamment par le nombre de dents, le diamètre, l'ouverture entre deux dents voisines et l'angle de poussée. FR 2 780 472 décrit un entraînement de chaîne de poussée comprenant un pignon muni de galets montés fous entre deux flasques munis de dents à raison d'un galet par dent de pignon. La chaîne de poussée est laissée libre dans sa partie courbe. La poussée s'exerce sur les axes de la chaîne selon une direction éloignée de la direction de translation de la chaîne.

Pour une chaîne de poussée à extrémité inférieure non engrenée, la Demanderesse a identifié un paramètre supplémentaire. Dans US 2009/0008615, l'extrémité inférieure de la chaîne est associée à des sections-guides coopérant avec des roulements suiveurs montés en saillie latéralement par rapport aux maillons pour supporter et stabiliser la chaîne. Toutefois dans une application de forage, le bruit est un paramètre non limitant, notamment car le bruit des autres éléments dépasse de très loin le bruit d'une chaîne de poussée.

Tout au contraire, la Demanderesse vise à ouvrir aux chaînes de poussée des marchés employant d'autres technologies à ce jour, par exemple à câble ou à courroie, dans des bâtiments de bureau ou résidentiels dans lesquels les vibrations et les bruits sont des paramètres de premier ordre.

A cette fin, le dispositif de chaîne de poussée comprend une chaîne ouverte de poussée. On entend ici par ouverte une chaîne à extrémités séparées. La chaîne comprend une portion de poussée, une portion magasin et une portion de liaison entre la portion de poussée et la portion magasin. La portion de liaison est disposée à distance du pignon. Le dispositif comprend un guide de chaîne de poussée sur une portion de poussée de ladite chaîne de poussée. Le guide détermine la trajectoire de la portion de poussée. La portion de poussée est en général verticale et le guide reprend des efforts transversaux, en général horizontaux. Le dispositif comprend un pignon d'entraînement pourvu de dents en prise avec la chaîne de poussée. Le pignon comprend une ou plusieurs rangées de dents. Une rangée regroupe les dents situées dans un même plan. Le dispositif comprend un espace de stockage de la portion magasin. Ledit espace de stockage est parallèle à la portion de poussée et situé à l'opposé de la portion de poussée par rapport à l'axe de rotation du pignon.

Le pignon d'entraînement est en prise bilatérale avec la chaîne de poussée de manière symétrique du côté de ladite portion de poussée et du côté de la portion magasin. La masse de la portion magasin de la chaîne reportée sur le pignon vient diminuer le couple demandé au moteur entraînant le pignon. Le pignon d'entraînement est en contact avec la chaîne de poussée par des surfaces en développante de cercle, lesdites surfaces appartenant aux dents, une dent engrenant la chaîne en définissant une ligne d'action présentant un angle avec la portion de poussée comprise entre -10° et 10°. Ledit guide comprend des surfaces de contact en matériau synthétique.

Préférablement, la ligne d'action présente un angle avec la portion de poussée comprise entre -2° et 2°. Les efforts subis par le guide sont faibles, en première approximation bornés par le sinus de l'angle ci-dessus, soit inférieurs à 3,5 % de l'effort de poussée de la chaîne. Les surfaces de contact en matériau synthétique offrent un frottement faible et une usure négligeable de la chaîne tout en subissant elles-mêmes une usure compatible avec des visites de maintenance espacées.

Comme illustré sur les figures, un pignon 1 denté est monté à rotation autour d'un axe parallèle à l'axe X. Des surfaces d'engrènement circulaires 100 appartenant à la chaîne 10 sont montées à translation selon un axe Z. Ici, le terme axe est employé dans son sens géométrique. Dans le cas des modes de réalisation décrits ci-avant, les surfaces d'engrènement circulaires 100 correspondent aux contours circulaires de barreaux 11 vus de profil. L'axe X correspond à la direction principale de l'arbre moteur 5. L'axe Z correspond à la direction verticale le long de laquelle se déplacent les surfaces d'engrènement circulaires 100 portées par les barreaux 11.

Les surfaces d'engrènement circulaires 100, représentées par des cercles dont les centres sont référencés Cₙ₋₁, Cₙ, et Cₙ₊₁, sont portées directement par le corps des barreaux 11 dépourvus de bagues ou par des organes intermédiaires, tels que les bagues, supportés par les corps des barreaux 11 et formant rouleaux d'entraînement.

L'axe de rotation du pignon 1 et l'axe de translation des surfaces d'engrènement circulaires 100 sont orthogonaux et distants l'un de l'autre d'une distance d.

Au cours du mouvement d'engrènement, au moins une dent 2 du pignon 1 est en contact avec une surface d'engrènement circulaire 100. Les dents 2 étant à denture droite et les surfaces d'engrènement circulaires 100 étant mobiles orthogonalement à l'axe X, le contact s'établit sur une ligne s'étendant selon l'axe X. Vu selon le plan des figures, le contact peut donc être représenté par un point de contact référencé M.

En mécanique, l'un des cas les plus communs d'une transmission de mouvement est celui consistant à transformer un mouvement de rotation en un autre mouvement de rotation. Une transmission connue comprend une première roue dentée à denture droite et une seconde roue dentée à denture droite engrenant ensemble en formant un engrenage droit pour transformer une première rotation en une seconde rotation. Dans la littérature, ce type d'engrenage simple sert de référence pour définir d'autres types d'engrenages. Certains termes techniques seront utilisés, par analogie, pour décrire l'engrenage de la chaîne de poussée.

Dans le cas présent, l'ensemble transforme un mouvement de rotation autour de l'axe X en un mouvement de translation le long de l'axe Z. En cela, le dispositif présente une analogie avec un engrenage pignon-crémaillère. Néanmoins, les surfaces d'engrènement circulaires 100 se distinguent du profil des crémaillères conventionnelles. L'engrènement entre des profils de dents 2 d'une part et des surfaces d'engrènement circulaires 100 d'autre part confère donc à l'engrenage du dispositif des propriétés d'engrènement distinctes des engrenages pignon-crémaillère. Ici, les barreaux 11 assurent deux fonctions distinctes, à savoir :
- former ou porter les surfaces d'engrènement circulaires 100 venant au contact des dents 2 du pignon 1, et
- assurer une bonne liaison entre les deux plaquettes d'un même maillon et donc assurer une bonne stabilité de la chaîne.

Le pignon 1 engrène avec une portion rectiligne, ici verticale, nommée portion de poussée 10a de la chaîne 10. Par conséquent, le mouvement des barreaux 11 au cours de l'engrènement est une translation. Ce mouvement de translation distingue l'engrenage de la chaîne 10 des systèmes conventionnels comprenant une chaîne fermée dont une portion courbe s'enroule autour d'une poulie dentée, à l'image des systèmes d'accouplement à chaîne de traction ou d'entraînement de bicyclettes. Le pignon 1 engrène également avec une portion rectiligne, ici verticale, nommée portion magasin 10b de la chaîne 10. La portion magasin 10b est disposée dans un espace de stockage 9.

En résumé, l'engrènement de la chaîne 10 ne peut être assimilé ni à celui des crémaillères, ni à celui des chaînes à rouleaux conventionnelles.

La combinaison du mouvement rectiligne et du profil circulaire des barreaux 11 confère à l'engrènement de l'ensemble de transmission 1 des performances élevées en vitesse particulièrement adaptées aux machineries à chaîne rigide.

L'axe Z correspond à la droite de contact le long de laquelle la vitesse tangentielle du pignon 1 est égale à la vitesse linéaire des surfaces d'engrènement circulaires 100. Par conséquent, la distance d séparant la droite de contact et l'axe de rotation du pignon 1 peut être assimilée au rayon primitif du pignon 1 et la droite de contact à la ligne primitive de la portion de poussée 10a de la chaîne 10 par analogie avec un engrenage pignon-crémaillère. Le module m du pignon 1 et le module m de la chaîne 10 sont égaux. Le pas p du pignon 1 et le pas p de la chaîne 10 sont égaux. Le pas p du pignon 1 est défini comme la longueur de l'arc pris sur le cercle primitif du pignon 1 entre deux points de flancs d'engrènement similaires de deux dents 2 successives. Le pas p et le module m sont liés par l'égalité suivante : p = m^{∗}π.

Lors de l'engrènement, un contact est établi entre le flanc d'engrènement du profil d'une dent 2 et les surfaces d'engrènement circulaires 100. Vu de profil, le contact entre deux surfaces convexes permet de définir une droite tangente représentée sur les figures par une tangente de contact 181. La tangente de contact 181 est en trait tireté. Au cours de l'engrènement, le point de contact M se déplace selon une droite théorique appelée ligne d'action et référencée 182. Mécaniquement, la ligne d'action 182 représente la direction des forces transmises d'un organe engrenant à l'autre via le point de contact M.

La ligne d'action 182 est sensiblement perpendiculaire à la tangente de contact 181. Dans les engrenages conventionnels à deux roues dentées dont les dentures présentes des profils en développante de cercle conjugués, la tangente de contact forme un angle α avec la direction de l'entraxe, c'est-à-dire la droite reliant les centres de chacune des deux roues dentées. La ligne d'action forme donc un angle α ± π/2 avec la direction de l'entraxe. L'angle α est généralement appelé angle de pression. L'appellation angle de pression est reprise ici.

Dans les engrenages à roue dentée et crémaillère dont les dentures présentent des profils en développante de cercle conjugués, la crémaillère peut être assimilée à une roue dentée de rayon infini. La droite s'étendant selon la direction de translation de la crémaillère et correspondant au cercle primitif de la roue dentée de rayon infini est alors appelé ligne de référence ou ligne primitive. Dans ce cas, la ligne d'action forme un angle α avec la ligne de référence. La tangente de contact forme donc un angle α ± π/2 avec la ligne de référence. L'angle α est aussi appelé angle de pression.

Les dentures à profil en développante de cercle conjugués, qu'il s'agisse d'engrenages de type roue-roue ou roue-crémaillère, présentent des propriétés améliorées par rapport aux premiers systèmes de transmission par obstacles, notamment ceux attribués à Léonard de Vinci. Une première propriété est de présenter une transmission sensiblement homocinétique : si la vitesse de l'un des organes de l'engrenage est constante, alors la vitesse de l'autre organe est aussi constante. Une seconde propriété est que l'angle de pression α est sensiblement constant au cours de l'engrènement, aux tolérances d'usinage près et aux phénomènes de début et de fin de contact près. Une troisième propriété est de favoriser le contact par roulement sans glissement entre deux surfaces convexes. La transmission du mouvement présente alors une bonne continuité, une bonne homogénéité. En outre, l'usure par frottement est limitée.

Pour résister à des efforts importants et éviter une fragilisation de la crémaillère, les dents à profil en développante de cercle sont généralement tronquées. Autrement dit, l'extrémité radiale de chaque dent est écrêtée et l'usinage du fond de denture (entre deux dents) n'est pas réalisé jusqu'au fond. Ainsi, les dents présentent une extrémité radiale sensiblement aplanie ou arrondie plutôt qu'une pointe aigue et le fond de denture présente une forme femelle sensiblement correspondante pour les mêmes raisons. Ces adaptation des profils en développante de cercle conjugués limitent aussi les phénomènes de glissement spécifique et d'interférence de fonctionnement qui apparaissent au début et à la fin du contact entre deux dents conjuguées, appelés aussi phase d'approche et phase de retrait.

La valeur de l'angle de pression est généralement fixée par des normes. Cette valeur est, par exemple, nominalement à 20° selon les normes européennes et à 25° selon les normes des États-Unis. Certains engrenages, notamment anciens, prévoient exceptionnellement une valeur de 14,5°. Fixer une valeur standard permet en outre de fabriquer (d'usiner) des organes d'engrenage tels que roues et crémaillères au moyen d'un outil unique. Autrement dit, concevoir un engrenage dont l'angle de pression α serait différent des standards impliquerait de concevoir un outil d'usinage dédié, ce qui est complexe et coûteux. Enfin, la conception d'engrenages est généralement réalisée aux moyens d'abaques mettant en relation un grand nombre de paramètres tels que le nombre de dents, le module, etc. Ces abaques sont établis sur la base d'un angle de pression α standard. Il est généralement déconseillé à un technicien de s'en éloigner.

Dans les modes de réalisation, les dents 2 du pignon 1 coopèrent opérationnellement avec des barreaux présentant un profil d'engrènement circulaire. Les phénomènes de glissement spécifiques et d'interférence de fonctionnement sont, ici, évités, y compris lors des phases d'approche et de retrait.

Le pignon 1 comprend, par exemple, entre cinq et quinze dents 2. Dans les exemples, le pignon 1 est conformé en une roue à neuf dents 2. Le pignon 1 est similaire, dans sa forme, à une roue dentée à profil en développante de cercle conjuguée à une crémaillère de pas p. Les dents 2 présentent un flanc d'attaque 2a et un flanc de fuite 2b. La notion d'attaque et de fuite est relative à l'effort exercé entre le pignon et la chaîne. Les dents 2 sont sensiblement pointues. La distance d est ajustée de sorte que l'angle de pression α au point de contact M soit sensiblement nul. Ici, la distance d est inférieure à la distance correspondant à un angle de pression standard à 20° ou 25°. La valeur de la distance d est sélectionnée en fonction des dimensions des organes, notamment du diamètre des barreaux 11 et du pas p. Par exemple, le pas p est compris entre 10 et 200 millimètres. Le module m est compris entre 10/π et 200/π millimètres, soit environ entre 3 et 64 millimètres.

Le tableau suivant présente quelques exemples de valeurs de distance d, données en millimètres, en fonction du pas p indiqué en millimètres dans la colonne de gauche et du nombre de dents indiqué en première ligne.

| Nb dents = | 5 | 6 | 8 | 9 | 10 | 12 | 15 |
|---|---|---|---|---|---|---|---|
| p = 20 mm | 15.915 | 19.099 | 25.465 | 28.648 | 31.831 | 38.197 | 47.746 |
| p = 30 mm | 23.873 | 28.648 | 38.197 | 42.972 | 47.746 | 57.296 | 71.620 |
| p = 40 mm | 31.831 | 38.197 | 50.930 | 57.296 | 63.662 | 76.394 | 95.493 |
| p = 50 mm | 39.789 | 47.746 | 63.662 | 71.620 | 79.577 | 95.493 | 119.366 |
| p = 60 mm | 47.746 | 57.296 | 76.394 | 85.944 | 95.493 | 114.592 | 143.239 |
| p = 80 mm | 63.662 | 76.394 | 101.859 | 114.592 | 127.324 | 152.789 | 190.986 |
| p = 90 mm | 71.620 | 85.944 | 114.592 | 128.916 | 143.239 | 171.887 | 214.859 |
| p = 100 mm | 79.577 | 95.493 | 127.324 | 143.239 | 159.155 | 190.986 | 238.732 |

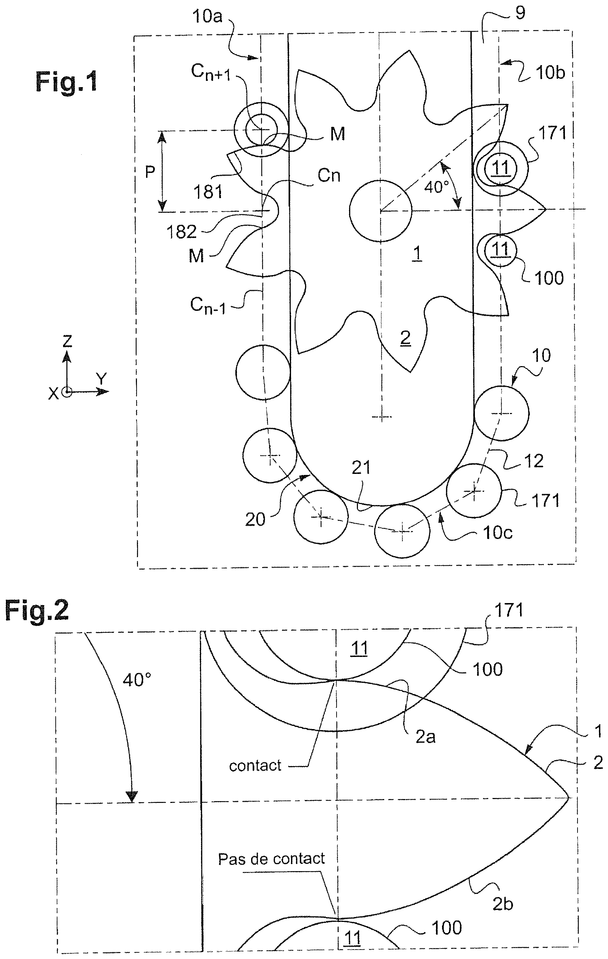

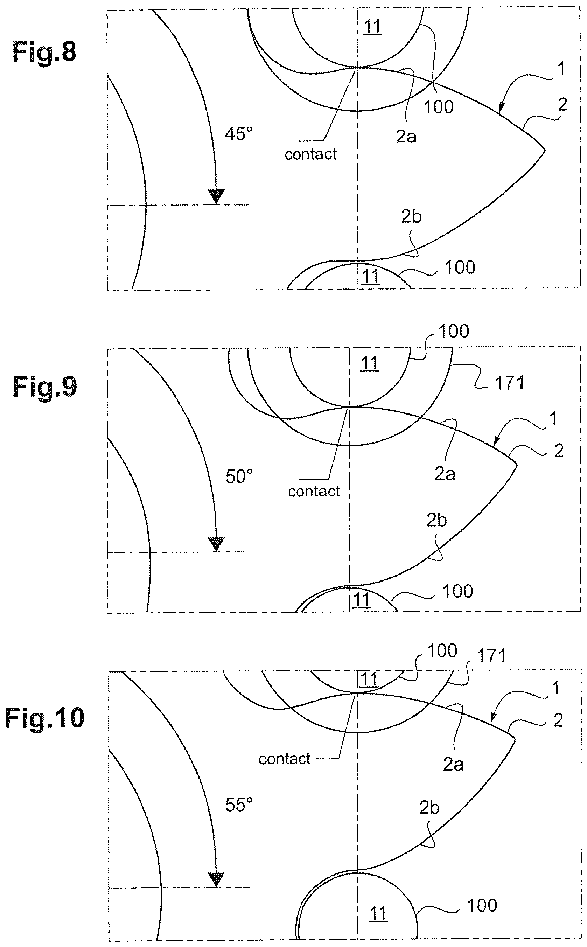

Les combinaisons de valeurs proposées sont des exemples de modes de réalisation de l'invention. Elles correspondent à un angle de pression α dont la valeur absolue est proche de zéro. Dans le mode des figures 1 à 10, le diamètre des surfaces d'engrènement circulaires 100 est de 24 mm, le diamètre des galets de guidage de 60 mm et le pas de 60 mm. La demi-distance entre les deux portions droites du guide 20 est de 85,944 mm.

L'engrenage représenté, comprenant les dents 2 du pignon 1 et les surfaces d'engrènement circulaires 100 conjuguées, présente donc un angle de pression α sensiblement nul. Autrement dit, la ligne d'action 182 forme un angle sensiblement nul avec la direction de translation d'une portion de poussée 10a de la chaîne 10. La ligne d'action 182 est sensiblement parallèle à l'axe Z. La tangente de contact 181 forme un angle sensiblement droit (α ± π/2) avec la direction de translation de la portion de poussée 10a de la chaîne 10. En pratique, compte tenu des tolérances d'usinage, l'angle est inférieur à 5° en valeur absolue.

Dans des variantes, l'angle de pression α présente une valeur absolue inférieure aux valeurs standards précitées mais supérieure à 0. Par exemple, l'angle de pression α peut être compris entre -10° et 10°, ou entre -5° et 5°, entre -2° et 2°, ou encore entre -1° et 1°. La tangente de contact 181 forme alors un angle (a ± π/2) avec la direction de translation de la portion de poussée 10a de la chaîne 10 compris respectivement entre 80° et 100°, entre 85° et 95°, entre 88° et 92°, entre 89° et 91°.

Dans les exemples représentés, l'espace entre les surfaces d'engrènement circulaires 100 portées par les barreaux 11 est libre. Il n'y a pas de « fond » reliant un barreau externe 11 à un autre. Le mouvement des dents 2 du pignon 1 au cours du mouvement d'engrènement est libre.

Ici, lorsque le pignon 1 comprend un petit nombre de dents 2, l'extrémité radiale des dents 2 est usinée pointue. L'extrémité radiale des dents 2 n'est pas écrêtée. Lorsque le pignon 1 comprend un grand nombre de dents 2, ces dernières sont écrêtées. Ceci permet de limiter le nombre de contacts simultanés et donc de réduire les vibrations et bruits parasites. En outre, lorsque le point de contact Mₙ₊₁ s'approche de l'extrémité d'une dent 2ₙ₊₁, en haut sur les figures, un nouveau point de contact Mₙ s'établit entre le couple dent 2ₙ/surface d'engrènement circulaire 100ₙ suivant, et ainsi de suite. L'effort est alors transmis par le nouveau couple 2ₙ/100ₙ avant que le point de contact Mₙ₊₁ ne soit fortement sollicité.

Dans l'exemple représenté, les fonds de dent 2 du pignon 1 sont usinés selon un profil sensiblement circulaire de diamètre égal ou supérieur au diamètre des surfaces d'engrènement circulaires 100. Ainsi, aux tolérances d'usinage près, chaque surface d'engrènement circulaire 100 vient se loger dans un fond entre deux dents 2 avant d'être entraînée par la dent 2 aval.

Dans les exemples décrits ici, les barreaux 11 sont montés fous par rapport aux maillons 12 de la chaîne 10. Ainsi, lors de l'engrènement, le roulement du barreau externe 11 contre la surface d'engrènement de la dent 1 est facilité. Les frottements sont réduits. L'usure des barreaux 11, comme celle des dents 1, est réduite. En variante, les barreaux 11 sont montés fixes par rapport à l'un des deux maillons 12 qu'ils relient. Dans ce cas et lorsque le contact est réalisé directement sur une surface d'engrènement circulaire 100 bloquée en rotation, des phénomènes de glissement apparaissent lors de l'engrènement. La fabrication de la chaîne 10 peut néanmoins s'en trouver facilitée. Par exemple, un maillon 12 et un barreau externe 11 peuvent être formés d'un seul tenant ou soudés ensemble.

Le dispositif tel que décrit jusqu'ici permet de réduire considérablement les forces radiales générées dans l'engrenage. Les forces radiales sont essentiellement orientées selon la direction y. Ceci permet de stabiliser encore la chaîne 10 lors de son mouvement et de réduire les vibrations transmises à la chaîne 10 par le pignon 1, en particulier lorsque des vitesses élevées sont mises en oeuvre. Par conséquent, la quantité de bruit et les niveaux sonores de fonctionnement sont également réduits par rapport aux installations connues. De telles performances sont particulièrement appréciables dans des applications destinées à des machineries telles que les ascenseurs et monte-charges de l'industrie du spectacle telles qu'au théâtre, au music-hall ou à l'opéra. Elles sont également appréciables pour faciliter la mobilité des personnes, à domicile ou dans des établissements de santé.

Les forces radiales générées dans la chaîne 10 en fonctionnement étant réduites, les contraintes composées supportées par les pièces composant l'ensemble de transmission 1 sont également réduites. La force transmise du pignon 1 aux barreaux 11 est essentiellement orientée selon la direction de translation de la chaîne 10. La composante tangentielle est augmentée tandis que la composante radiale est rendue négligeable. Le rapport de transmission est ainsi proche de 100 %. Ainsi, les organes de guidage s'opposant à un déplacement de la chaîne 10 selon une direction radiale sont moins sollicités que dans les systèmes connus. Les organes de guidage tels que des tasseaux peuvent donc être réalisés à base de matériaux présentant des propriétés de résistance mécanique moindres que celles du métal habituellement employé. Par exemple, des matériaux plastiques, tels que le polyuréthane ou le polyéthylène, peuvent être utilisés tout en préservant un faible risque de rupture en fonctionnement. Ceci permet non seulement de réaliser des économies en matière première mais aussi de limiter les contacts métal-métal. Les bruits, en particulier du type cliquetis, sont encore réduits.

Dans la suite, on utilise les termes avant, arrière, haut, bas, droite et gauche au sens relatif. Sur les figures, un repère tridimensionnel est représenté : x est la direction latérale orientée de la gauche vers la droite ; y est la direction de la profondeur orientée de l'avant vers l'arrière ; z est la direction verticale orientée du bas vers le haut. La chaîne étant un organe sensiblement linéaire, on utilise les termes de tête et queue pour distinguer les deux extrémités.

Les principes généraux de fonctionnement, et notamment la cinématique de la machinerie sont décrits dans FR 2 786 476 que le lecteur est invité à consulter.

La chaîne 10 présente une portion de poussée 10a et une portion magasin 10b parallèles. La portion de poussée 10a et la portion magasin 10b sont reliées par une portion de liaison 10c courbe. La portion de poussée 10a est supportée par les dents 2 du pignon 1 d'un côté et la portion magasin 10b est supportée par les dents 2 du pignon 1 du côté opposé diamétralement. La portion de liaison 10c forme une courbe à 180° sous le pignon 1. La portion de liaison 10c est supportée par la portion de poussée 10a et la portion magasin 10b. Le pignon 1 engrène la portion de poussée 10a de la chaîne 10 depuis son côté interne par rapport à la portion de liaison 10c. Le pignon 1 engrène la portion magasin 10b depuis son côté interne par rapport à la portion de liaison 10c.

La chaîne 10 inclut des maillons 12. Les maillons 12 sont articulés les uns avec les autres de manière à former la chaîne 10. La chaîne 10 équipant le dispositif forme un organe de transmission de mouvement. Dans la suite, les maillons 12 sont identifiés par un indice 1 à N depuis le maillon de queue 12₁ jusqu'au maillon de tête 12_{N} portant une platine d'accroche. L'indice n vise un maillon 12ₙ ou la pièce d'un maillon 12ₙ. Par exemple, la référence 121ₙ désigne l'une des plaquettes 121ₙ du maillon 12ₙ. Dans ce contexte, le terme maillon doit être compris comme le motif mécanique élémentaire reproduit à l'identique le long de la chaîne 10. Le maillon 12ₙ est relié à un maillon 12ₙ₋₁ d'une part et à un maillon 12ₙ₊₁ d'autre part, avec 1 < n < N.

Au cours de la montée, c'est-à-dire en rotation horaire du pignon 1, un maillon 12ₙ appartient successivement à la portion magasin 10b, à la portion de liaison 10c puis à la portion de poussée 10a de la chaîne 10, et inversement lors de la descente.

Le dispositif comprend également un guide 20 stationnaire. Le guide 20 forme une surface de roulement pour les galets de guidage 171 décrits ci-après. Le guide 20 peut comprendre une pièce formant surface de roulement réalisée en matériau synthétique à faible usure, par exemple du polyuréthane ou du polyamide. Le guide 20 présente une première portion droite correspondant à la portion de poussée 10a, une deuxième portion droite correspondant à la portion magasin 10b et une portion courbe correspondant à la portion de liaison 10c. Le guide 20 offre une surface de roulement dirigée vers l'extérieur, la portion courbe étant convexe. La portion courbe se raccorde à la première portion droite à une extrémité et à la deuxième portion droite à l'autre extrémité de manière lisse, autrement dit sans point singulier de la dérivée. La portion courbe forme un organe de renvoi 21. Dans le mode de réalisation des figures 1 à 5, la portion courbe est en demi-cercle à rayon constant.

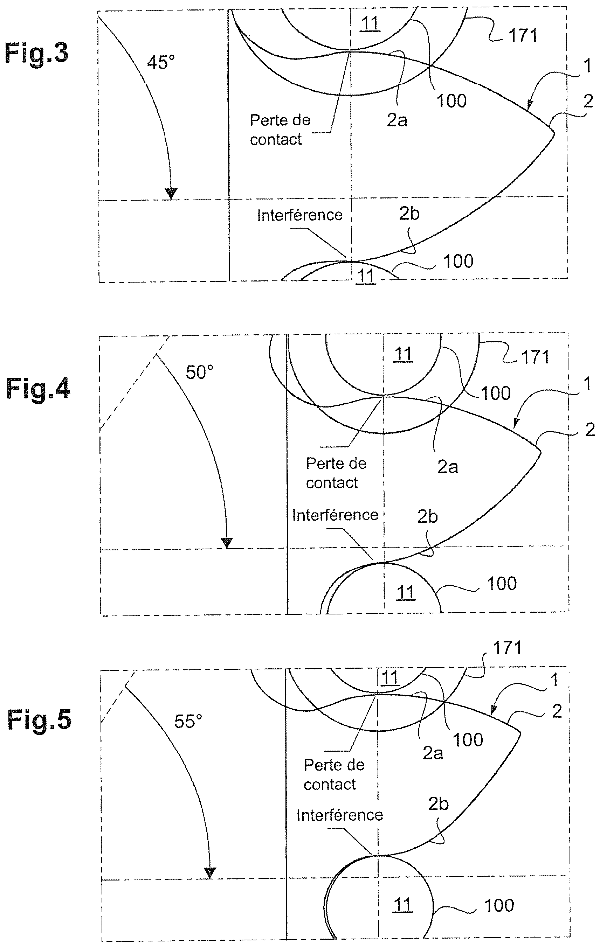

Dans le but d'améliorer encore les performances, la Demanderesse a mené des essais de profils de portion courbe de guide 20. La chaîne 10 et le pignon 1 présentent des tolérances d'usinage très serrées pour réduire l'usure et le bruit. Recherchant les sources ponctuelles de bruit, l'engrènement côté portion magasin 10b a été surveillé. Pour un pignon à neuf dents, ayant une dent en position à 40° par rapport au plan horizontal XY avec la dent suivante à 0°, il y a contact du flanc d'attaque 2a ou amont de la dent suivante et absence de contact du flanc de fuite 2b ou aval. Cette situation est considérée comme normale. Il a été découvert que pour les positions 45°, 50° et 55°, respectivement en figures 3, 4 et 5, il y a perte de contact du flanc d'attaque 2a de la dent suivante et reprise de contact du flanc de fuite 2b ou aval. La reprise de contact est génératrice de bruit.

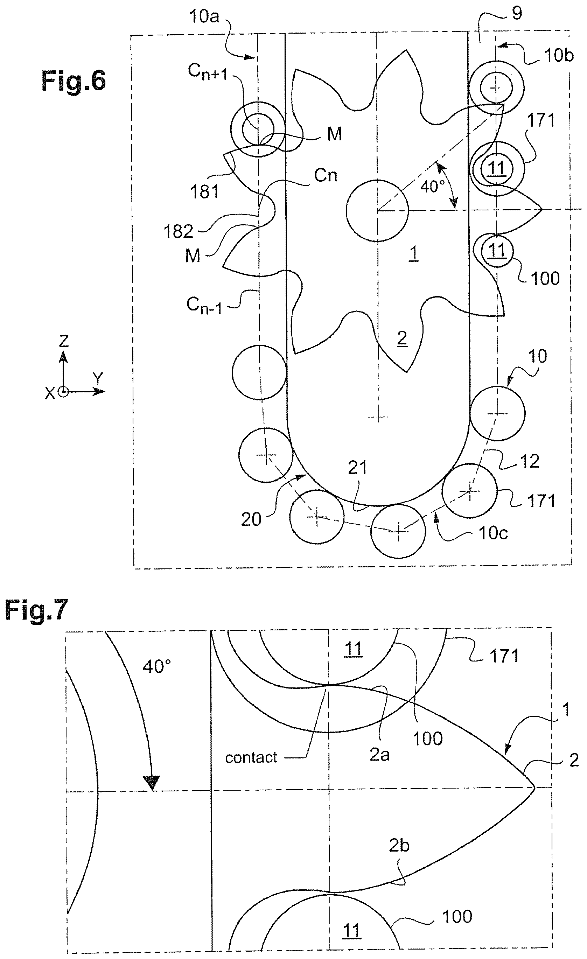

Au contraire, la continuité de la surface de contact est recherchée. Dans le mode de réalisation des figures 6 à 10, la portion courbe est à rayon non constant tout en s'étendant sur 180°. La portion courbe présente une symétrie par rapport au plan XZ. La portion courbe est constituée de deux quadrants identiques, d'où une fabrication simple. Chaque quadrant présente une symétrie par rapport à un plan à 45° par rapport au plan XZ et parallèle à l'axe X. Chaque quadrant comprend une zone rectiligne supérieure disposée dans le prolongement de la première portion droite ou de la deuxième portion droite, une zone rectiligne inférieure disposée dans le prolongement de la zone rectiligne inférieure de l'autre quadrant et dans le plan XY, et une zone arrondie entre la zone rectiligne supérieure et la zone rectiligne inférieure.

La portion courbe peut comprendre deux portions en arc de cercle de même rayon et de centres décalés. Lesdits centres peuvent être distants horizontalement l'un de l'autre. Le rayon peut être inférieur au rayon du mode de réalisation des figures 1 à 5. Le rayon peut être inférieur à la demi distance entre les deux zones rectilignes supérieures. Les deux portions en arc de cercle peuvent être reliées par une zone rectiligne inférieure, notamment inférieure.

La zone arrondie présente un rayon supérieur à la demi distance entre les première et deuxième portions droites en prenant comme centre le point situé à l'intersection d'une droite normale à la zone rectiligne supérieure et sécante en extrémité de la zone rectiligne supérieure et d'une droite normale à la zone rectiligne inférieure et sécante en extrémité de la zone rectiligne inférieure. En se rapportant au guide 20 dans son ensemble, on établit le centre théorique, pour comparaison, dans le plan de symétrie XZ du guide 20 à une distance des zones rectilignes inférieures égale à la demi distance entre les première et deuxième portions droites. La portion courbe est proche d'une développante de cercle, par exemple par quadrant. La zone arrondie est construite par construction géométrique autour d'un pignon fictif identique au pignon 1 réel et disposé au bas de la portion de liaison.

La position de la chaîne 10 est illustrée sur les figures 7 à 10 pour des angles de pignon 1 de 40°, 45°, 50° et 55°. A chacun de ces angles, il y a contact du flanc d'attaque 2a de la dent suivante et absence de contact du flanc de fuite 2b. Le contact présente donc une constance sur au moins l'excursion de 15° représentée. En pratique, le contact est constant sur le flanc d'attaque sur un angle de 40°. Plus généralement, le contact est constant sur 360°/nombre de dents.

Lorsque le pignon 1 est en rotation antihoraire, la chaîne 10 est poussée vers le magasin par chacune des dents 2 au contact de la chaîne 10. Lorsque le pignon 1 est en rotation horaire, la chaîne 10 pousse chacune des dents 2 au contact de la chaîne 10. Il se produit une prise de contact en début d'engrènement et une sortie de contact en fin d'engrènement, la portion de poussée 10a étant chargée.

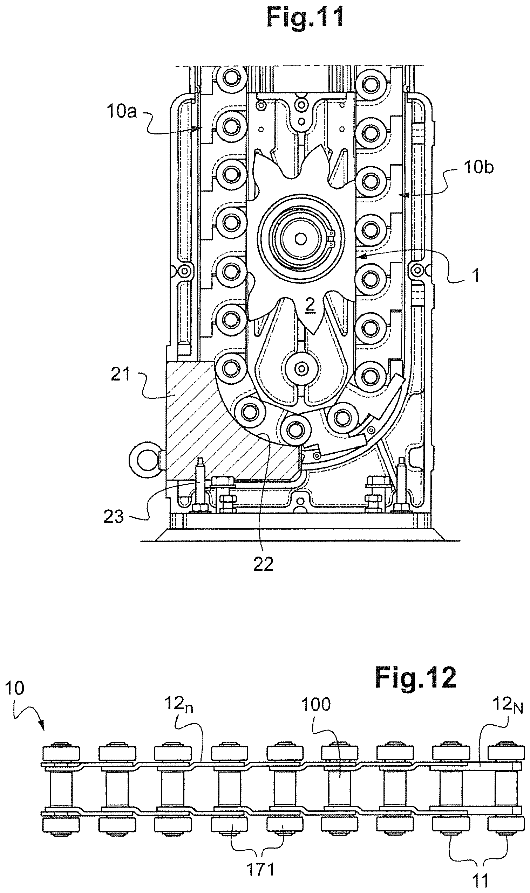

Dans le mode de réalisation de la figure 11, l'organe de renvoi 21 est une pièce présentant une surface convexe de roulement 22 pour les galets de guidage 171. L'organe de renvoi 21 a été omis en partie droite de la figure pour montrer plus complètement la chaîne. L'organe de renvoi 21 présente une faible épaisseur selon la direction x pour laisser libre la trajectoire des maillons de la chaîne. La surface convexe de roulement 22 présente un rayon variable par analogie avec la figure 6. La surface convexe de roulement 22 peut être fixe ou mobile. Dans le cas mobile, un pousseur 23 est prévu dans la disrection z. Le pousseur 23 peut être élastique. Le pousseur 23 exerce un effort de compression sur la chaîne 10.

La chaîne 10 peut être du type décrit dans FR 2 780 472 auquel le lecteur est invité à se reporter.

Dans le mode de réalisation des figures 11 à 13, la chaîne 10 comprend une pluralité de maillons 12 successifs. Les maillons 12 sont articulés autour de barreaux 11 formant axes transversaux. Chaque maillon 12 comprend deux joues 12a essentiellement parallèles. Chaque joue 12a est percée de deux trous de réception des axes d'articulation. Chaque joue 12a est équipée d'un prolongement 12b définissant une face active transversale avant et une face active transversale arrière pour prendre appui respectivement sur une face active transversale arrière d'une joue 12a de maillon antérieur et une face active transversale avant d'une joue de maillon postérieur lorsque les maillons 12 sont en ligne droite, notamment au sein de la portion de poussée de la chaîne 10. Chaque joue 12a comprend une partie amont et une partie aval décalées transversalement. Le décalage peut être effectué à la presse. La partie amont et la partie aval sont parallèles. La partie amont et le prolongement 12b sont situés dans le même plan. La partie aval est décalée vers l'intérieur du maillon. La partie aval voisine avec la partie amont d'un autre maillon 12 articulé sur le même barreau 11.

Les axes d'articulation des maillons 12 sont munis à chacune de leurs extrémités de galets de guidage 171. Les galets de guidage 171 sont situés à l'extérieur des joues. Les galets de guidage 171 coopèrent avec des rails de guidage latéraux prévus sur des flasques latéraux d'un carter faisant parti du guide 20 dans les portions de poussée et magasin, et avec l'organe de renvoi 21 dans la portion de liaison.

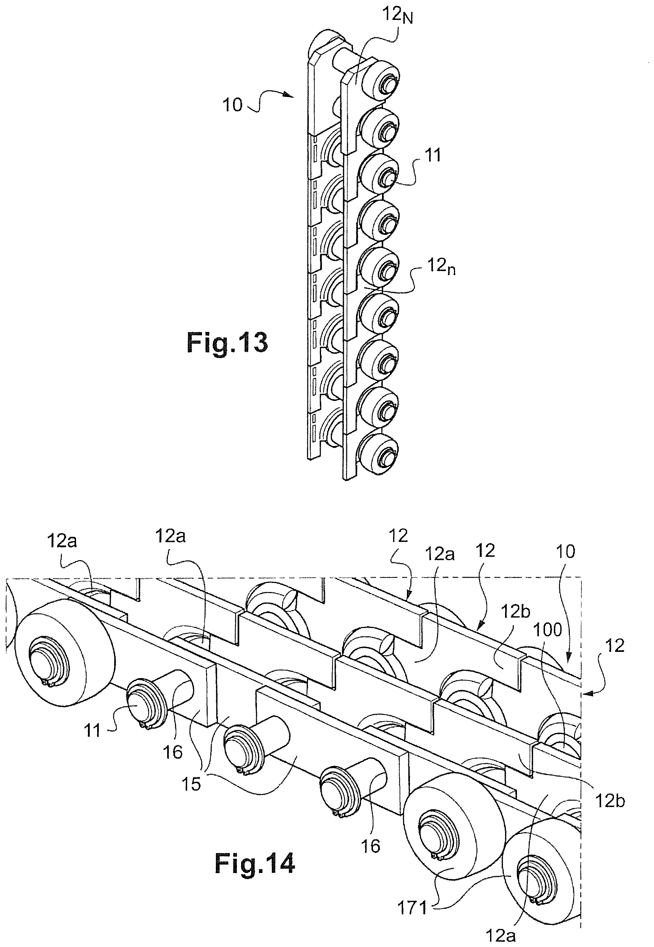

Dans le mode de réalisation de la figure 14, la chaîne 10 comprend en outre des tendeurs élastiques 15. Trois galets de guidage 171 ont été omis pour laisser voir les tendeurs élastiques 15. Les tendeurs élastiques 15 favorisent la suppression du jeu entre maillons 12. Les tendeurs élastiques 15 sont réalisés en matériau souple, par exemple du polyuréthane. Les tendeurs élastiques 15 sont monoblocs. Chaque tendeur 15 est pourvu de trous de réception 16 des barreaux 11 formant axes d'articulation. Chaque tendeur 15 présente la forme d'un parallélépipède d'épaisseur voisine de celle d'un maillon 12. La longueur d'un tendeur 15 est inférieure à celle d'un maillon 12 pour éviter le contact entre des tendeurs coplanaires. La hauteur d'un tendeur 15 est inférieure à celle d'un maillon 12, le tendeur 15 étant dépourvu de prolongement. Chaque tendeur 15 est monté sur deux barreaux 11 voisins. Chaque tendeur 15 est monté sur les extrémités des barreaux 11 au-delà des maillons 12. Un tendeur pair et un tendeur impair sont montés sur la première extrémité d'un barreau 11 et, de l'autre côté, un tendeur pair et un tendeur impair sont montés sur la deuxième extrémité du même barreau 11, opposée à la première extrémité.

Les tendeurs de rang impair sont coplanaires. Les tendeurs de rang pair sont coplanaires dans un plan parallèle au plan des tendeurs de rang impair. Les tendeurs de rang impair sont en contact avec les joues de deux maillons 12 successifs. Les tendeurs de rang pair sont en contact avec les tendeurs de rang impair. Les tendeurs de rang impair sont entre les maillons 12 et les tendeurs de rang pair. Les tendeurs de rang pair sont entre les tendeurs de rang pair et les galets de guidage 171.

L'ensemble de transmission peut prendre la forme d'un module ou d'un kit de montage en pièces détachées. Par exemple, deux châssis identiques équipés d'entraînement identiques peuvent être compatibles avec des magasins et/ou des chaînes de différentes longueurs. Un kit peut comprendre plusieurs chaînes ou des maillons optionnels à ajouter/retirer.

L'invention ne se limite pas aux ensembles de transmission et machineries décrits ci-avant, seulement à titre d'exemples, mais elle englobe toutes les variantes que pourra envisager l'homme de l'art.

## Revendications

1. Dispositif de chaîne de poussée, comprenant une chaîne (10) ouverte de poussée comprenant une portion de poussée (10a) et une portion magasin (10b), un guide (20) de chaîne de poussée sur une portion de poussée de ladite chaîne de poussée, un pignon d'entraînement (1) pourvu de dents (2) en prise avec la chaîne de poussée, un espace de stockage (9) de la portion magasin, ledit espace de stockage (9) étant parallèle à la portion de poussée et situé à l'opposé de la portion de poussée, le pignon d'entraînement (1) est en prise bilatérale avec la chaîne de poussée de manière symétrique du côté de ladite portion de poussée (10a) et du côté de la portion magasin (10b), la chaîne (10) comprenant une portion de liaison (10c) entre la portion de poussée (10a) et la portion magasin (10b), disposée à distance du pignon, le pignon d'entraînement (1) étant en contact avec la chaîne de poussée par des surfaces (2a) en développante de cercle, lesdites surfaces (2a) appartenant aux dents (2), une dent (2) engrenant la chaîne (10) en définissant une ligne d'action présentant un angle avec la portion de poussée comprise entre -10° et 10°, **caractérisé en ce que** ledit guide (20) comprend des surfaces de contact en matériau synthétique ; et le guide (20) présente une première portion droite correspondant à la portion de poussée (10a), une deuxième portion droite correspondant à la portion magasin (10b) et une portion courbe correspondant à la portion de liaison (10c), et offre une surface de roulement dirigée vers l'extérieur, la portion courbe étant convexe, la portion courbe se raccordant à la première portion droite à une extrémité et à la deuxième portion droite à l'autre extrémité de manière lisse, la portion courbe formant un organe de renvoi (21), la portion courbe étant à rayon non constant et s'étendant sur 180° ; la portion courbe présentant une symétrie par rapport au plan passant par l'axe du pignon d'entraînement et par l'axe de la portion de poussée et étant constituée de deux quadrants identiques, chaque quadrant présente une symétrie par rapport à un plan à 45° par rapport au plan passant par l'axe du pignon d'entraînement et par l'axe de la portion de poussée et parallèle à l'axe de la portion de poussée, chaque quadrant comprenant une zone rectiligne supérieure disposée dans le prolongement de la première portion droite ou de la deuxième portion droite, une zone rectiligne inférieure disposée dans le prolongement de la zone rectiligne inférieure de l'autre quadrant et dans le plan passant par l'axe du pignon d'entraînement et normal à l'axe de la portion de poussée, et une zone arrondie entre la zone rectiligne supérieure et la zone rectiligne inférieure, la portion courbe comprend deux portions en arc de cercle de même rayon et de centres décalés, distants horizontalement l'un de l'autre, le rayon étant inférieur à la demi distance entre les deux zones rectilignes supérieures, le guide (20) forme une surface de roulement pour des galets de guidage, et la portion courbe comprend une pluralité de portions en arc de cercle, lesdites portions étant tangentes.

2. Dispositif selon la revendication 1, dans lequel lesdites surfaces de contact sont des surfaces de roulement ou des surfaces de glissement.

3. Dispositif selon l'une des revendications précédentes, dans lequel le pignon d'entraînement (1) est unique.

4. Dispositif selon l'une des revendications précédentes, dans lequel au moins l'une de la portion de poussée (10a) et de la portion magasin (10b) est disposée au-dessus du pignon d'entraînement (1), et la portion de liaison (10c) est disposée au-dessous du pignon (1).

5. Dispositif selon l'une des revendications précédentes, dans lequel la portion de liaison (10c) est guidée par un organe de renvoi (21).

6. Dispositif selon la revendication 5, dans lequel l'organe de renvoi (21) est proche d'une développante de cercle.

7. Dispositif selon la revendication 5 ou 6, dans lequel l'organe de renvoi est fixe.

8. Dispositif selon la revendication 5 ou 6, dans lequel l'organe de renvoi est réglable en position.

9. Dispositif selon la revendication 5 ou 6, dans lequel l'organe de renvoi comprend un tendeur (15).

10. Dispositif selon la revendication 5 ou 6, dans lequel l'organe de renvoi comprend un organe de mise en compression.

11. Dispositif selon l'une des revendications précédentes, dans lequel le pignon (1) est pourvu de 5 à 15 dents (2) à profil en développante de cercle, monté à rotation autour d'un axe, et la chaîne (10) comprend des barreaux (11), l'un au moins des barreaux (11) étant en prise avec le pignon (1), et le pignon (1) comprend une denture droite présentant un module *m* compris entre 3 et 64 millimètres.

12. Dispositif selon l'une des revendications précédentes, dans lequel la chaîne comprend un organe élastique précontraint en tension.

13. Dispositif selon l'une des revendications précédentes, dans lequel la ligne d'action présente un angle avec la portion de poussée compris entre -2° et 2°.

## Patentansprüche

1. Schubkettenvorrichtung, umfassend eine offene Schubkette (10), die einen Schubabschnitt (10a) und einen Gehäuseabschnitt (10b) umfasst, eine Schubkettenführung (20) an einem Schubabschnitt der Schubkette, ein Antriebsritzel (1), das mit Zähnen (2) versehen ist, die mit der Schubkette in Eingriff stehen, einen Stauraum (9) für den Gehäuseabschnitt, wobei der Stauraum (9) parallel zum Schubabschnitt verläuft und gegenüber dem Schubabschnitt angeordnet ist, wobei das Antriebsritzel (1) symmetrisch auf der Seite des Schubabschnitts (10a) und auf der Seite des Gehäuseabschnitts (10b) in beidseitigem Eingriff mit der Schubkette steht, wobei die Kette (10) einen Verbindungsabschnitt (10c) zwischen dem Schubabschnitt (10a) und dem Gehäuseabschnitt (10b) umfasst, der beabstandet von dem Ritzel angeordnet ist, wobei das Antriebsritzel (1) in Kontakt mit der Schubkette durch Flächen (2a) in der Evolvente eines Kreises ist, wobei die Flächen (2a) zu den Zähnen (2) gehören, wobei ein Zahn (2) mit der Kette (10) kämmt, indem er eine Wirkungslinie definiert, die einen Winkel mit dem Schubabschnitt zwischen -10° und 10° aufweist, **dadurch gekennzeichnet, dass** die Führung (20) Kontaktflächen aus synthetischem Material umfasst; und die Führung (20) einen ersten geraden Abschnitt, der dem Schubabschnitt (10a) entspricht, einen zweiten geraden Abschnitt, der dem Gehäuseabschnitt (10b) entspricht, und einen gekrümmten Abschnitt aufweist, der dem Verbindungsabschnitt (10c) entspricht, und eine nach außen gerichtete Lauffläche bereitstellt, wobei der gekrümmte Abschnitt konvex ist, der gekrümmte Abschnitt an einem Ende glatt in den ersten geraden Abschnitt und am anderen Ende in den zweiten geraden Abschnitt übergeht, der gekrümmte Abschnitt ein Umlenkelement (21) bildet, der gekrümmte Abschnitt einen nicht konstanten Radius aufweist und sich über 180° erstreckt; der gekrümmte Abschnitt eine Symmetrie in Bezug auf die Ebene aufweist, die durch die Achse des Antriebsritzels und durch die Achse des Schubabschnitts verläuft, und aus zwei identischen Quadranten besteht, wobei jeder Quadrant eine Symmetrie in Bezug auf eine Ebene aufweist, die im 45°-Winkel zu der Ebene liegt, die durch die Achse des Antriebsritzels und durch die Achse des Schubabschnitts verläuft, und die parallel zur Achse des Schubabschnitts verläuft, jeder Quadrant einen oberen geradlinigen Bereich, der in Verlängerung des ersten geraden Abschnitts oder des zweiten geraden Abschnitts angeordnet ist, einen unteren geradlinigen Bereich, der in Verlängerung des unteren geradlinigen Bereichs des anderen Quadranten und in der Ebene angeordnet ist, die durch die Achse des Antriebsritzels und senkrecht zur Achse des Schubabschnitts verläuft, und einen abgerundeten Bereich zwischen dem oberen geradlinigen Bereich und dem unteren geradlinigen Bereich umfasst, wobei der gekrümmte Abschnitt zwei bogenförmige Abschnitte mit demselben Radius und versetzten Mittelpunkten umfasst, die horizontal voneinander beabstandet sind, wobei der Radius kleiner ist als der halbe Abstand zwischen den beiden oberen geradlinigen Bereichen, die Führung (20) eine Lauffläche für Führungsrollen bildet, und der gekrümmte Abschnitt eine Mehrzahl von kreisbogenförmigen Abschnitten umfasst, wobei die Abschnitte tangential zueinander sind.

2. Vorrichtung nach Anspruch 1, wobei die Kontaktflächen Rollflächen oder Gleitflächen sind.

3. Vorrichtung nach einem der vorhergehenden Ansprüche, wobei das Antriebsritzel (1) einheitlich ist.

4. Vorrichtung nach einem der vorhergehenden Ansprüche, wobei mindestens eines von der Schubabschnitt (10a) und der Gehäuseabschnitt (10b) oberhalb des Antriebsritzels (1) angeordnet ist und der Verbindungsabschnitt (10c) unterhalb des Antriebsritzels (1) angeordnet ist.

5. Vorrichtung nach einem der vorhergehenden Ansprüche, wobei der Verbindungsabschnitt (10c) durch ein Umlenkelement (21) geführt ist.

6. Vorrichtung nach Anspruch 5, wobei das Umlenkelement (21) einer Evolvente eines Kreises nahe ist.

7. Vorrichtung nach Anspruch 5 oder 6, wobei das Umlenkelement feststehend ist.

8. Vorrichtung nach Anspruch 5 oder 6, wobei das Umlenkelement in seiner Position verstellbar ist.

9. Vorrichtung nach Anspruch 5 oder 6, wobei das Umlenkelement eine Spannvorrichtung (15) umfasst.

10. Vorrichtung nach Anspruch 5 oder 6, wobei das Umlenkelement ein Kompressionselement umfasst.

11. Vorrichtung nach einem der vorhergehenden Ansprüche, bei der das Ritzel (1) mit 5 bis 15 Zähnen (2) mit einem kreisförmigen Evolventenprofil versehen ist, die um eine Achse drehbar gelagert sind, und die Kette (10) Stangen (11) umfasst, wobei mindestens eine der Stangen (11) mit dem Ritzel (1) in Eingriff steht, und das Ritzel (1) eine Geradverzahnung mit einem Modul *m* zwischen 3 und 64 Millimetern aufweist.

12. Vorrichtung nach einem der vorhergehenden Ansprüche, wobei die Kette ein auf Zug vorgespanntes elastisches Element umfasst.

13. Vorrichtung nach einem der vorhergehenden Ansprüche, wobei die Wirkungslinie mit dem Schubabschnitt einen Winkel zwischen -2° und 2° aufweist.

## Claims

1. A thrust chain device, comprising an open thrust chain (10) comprising a thrust portion (10a) and a housing portion (10b), a thrust chain guide (20) on a thrust portion of said thrust chain, a driving sprocket (1) provided with teeth (2) engaged with the thrust chain, a storage space (9) of the housing portion, said storage space (9) being parallel to the thrust portion and located opposite the thrust portion, the driving sprocket (1) engages bilaterally with the thrust chain in a symmetric manner on the side of said thrust portion (10a) and on the side of the housing portion (10b), the chain (10) comprising a connection portion (10c) between the thrust portion (10a) and the housing portion (10b), arranged at a distance from the sprocket, the driving sprocket (1) being in contact with the thrust chain by circular-involute surfaces, said surfaces (2a) belonging to the teeth (2), one tooth (2) meshing with the chain (10) while defining a line of action having an angle with the thrust portion between -10° and 10°, **characterized in that** said guide (20) comprises contact surfaces made of a synthetic material; and the guide (20) has a first straight portion corresponding to the thrust portion (10a), a second straight portion corresponding to the housing portion (10b) and a curved portion corresponding to the connection portion (10c), and offers a rolling surface oriented outwards, the curved portion being convex, the curved portion being smoothly connected to the first straight portion at one end and to the second straight portion at the other end, the curved portion forming a return member (21), the curved portion having a non-constant radius and extending over 180°; the curved portion is symmetrical about the plane passing through the axis of the driving sprocket and the axis of the thrust portion and is made up of two identical quadrants, each quadrant is symmetrical about a plane at 45° to the plane passing through the axis of the driving sprocket and the axis of the thrust portion and parallel to the axis of the thrust portion, each quadrant having an upper rectilinear zone that extends the first straight portion or the second straight portion, a lower rectilinear zone that extends the lower rectilinear zone of the other quadrant and is in the plane passing through the axis of the driving sprocket and normal to the axis of the thrust portion, and a rounded zone between the upper rectilinear zone and the lower rectilinear zone, the curved portion has two circular arc portions of the same radius with offset centers, separated horizontally from one another, the radius being less than half of the distance between the two upper rectilinear zones, the guide (20) forms a rolling surface for guide rollers, and the curved portion includes a plurality of circular arc portions, said portions being tangents.

2. The device as claimed in claim 1, in which said contact surfaces are rolling surfaces or sliding surfaces.

3. The device as claimed in claim 1, in which there is only one driving sprocket (1).

4. The device as claimed in one of the preceding claims, in which at least one of the thrust portion (10a) and the housing portion (10b) is arranged above the driving sprocket (1), and the connection portion (10c) is arranged beneath the sprocket (1).

5. The device as claimed in one of the preceding claims, in which the connection portion (10c) is guided by a return member (21).

6. The device as claimed in claim 5, in which the return member (21) is approximately an involute of a circle.

7. The device as claimed in claim 5 or 6, in which the return member is static.

8. The device as claimed in claim 5 or 6, in which the position of the return member is adjustable.

9. The device as claimed in claim 5 or 6, in which the return member includes a tensioner (15).

10. The device as claimed in claim 5 or 6, in which the return member includes a compressing member .

11. The device as claimed in one of the preceding claims, in which the sprocket (1) has between 5 and 15 teeth (2) with circular-involute profiles, mounted rotatably about an axis, and the chain (10) has bars (11), at least one of the bars (11) being engaged with the sprocket (1), and the sprocket (1) has straight teeth with a module m of between 3 and 64 mm.

12. The device as claimed in one of the preceding claims, in which the chain has a pretensioned elastic member.

13. The device as claimed in one of the preceding claims, in which the line of action forms an angle of between -2° and 2° with the thrust portion.
